# EUROPEAN PATENT SPECIFICATION

(11) **EP 4 129 132 B1**
(45) Date of publication and mention of the grant of the patent: **27.03.2024**
(21) Application number: 21189900.0
(22) Date of filing: 05.08.2021
(51) Int. Cl.: A47J 43/07, A47J 43/08

(54) **AXIAL ADAPTER FOR KITCHEN APPLIANCE**
AXIALADAPTER FÜR KÜCHENGERÄT
ADAPTATEUR AXIAL POUR APPAREIL DE CUISINE

(43) Date of publication of application: 08.02.2023
(73) Proprietor: BSH Hausgeräte GmbH, 81739 München (DE)
(72) Inventor: Gruber, Borut, 2380 Slovenj Gradec (SI); Pesec, Jurij, 3301 Petrovce (SI)

(56) References cited:
- EP-A1- 3 292 804
- EP-A2- 0 529 287
- DE-A1- 2 461 286
- DE-B- 1 055 773
- DE-C- 865 524

## Description

The present invention concerns an axial adapter for a kitchen appliance driven by an electric motor, in particular a household appliance, wherein the axial adapter is adapted to be mounted to the kitchen appliance and adapted to carry an attachment of the kitchen appliance, wherein the adapter has a housing which is opened at its opposite end faces and inside which a clutch is positioned rotatably in order to transfer a rotation of a motor output shaft and a motor torque to the attachment.

Adapters are generally used if an attachment requires a special mounting fixture as it does not fit to an integrally standard mounting fixture provided by the electric kitchen appliance. Exemplary attachments are meat mincers and pasta makers. In order to simplify the handling of the adapters, it is recommended to have such an adapter design that every single part of the adapter should be held in place in the housing, independent of the orientation of the adapter. In other words, unintentional dissasembling (a part can fall down such as a clutch) should be prevented when the adapter is removed from the kitchen appliance and put upside down. The document EP 0 529 287 A2 discloses an axial adapter for a kitchen appliance.

It is an object of the present invention to provide such an axial adapter design that unintentional loss of a part, in particular of a clutch, is prevented.

The object is achieved by an axial adapter according to features of claim 1. Advantageous embodiments are disclosed in the dependent claims, the description and the figures.

An inventive axial adapter for a kitchen appliance driven by an electric motor, adapted to be mounted to the kitchen appliance and adapted to carry an attachment of the kitchen appliance has a housing which is opened at its opposite end faces and a clutch which is positioned rotatably inside the housing in order to transfer a rotation of a motor output shaft and a motor torque to the attachment. According to the invention, the clutch is in rotatable form-fit engagement with a bushing which is firmly clamped between a first part of the adapter and a second part of the adapter opposite to the first part.

Due to the form-fit engagement with the bushing in combination with the fixed arrangement of the bushing inside the housing, an unintentional loss of the clutch and of the bushing itself is prevented. Although the adapter has a modular design, the parts are fixed to each other. The adapter parts can be made of plastics material or, in particular the housing can be made of any other materials such as brushed aluminium or stainless steel

Preferably, the first part is a releasable cup-like insert which is fixed within the housing by screws or snap connection and which has an opening for the clutch. By means of this, the first part can be removed and the bushing can be disassembled easily facilitating the cleaning of the adapter and its part.

The second part is preferably an integral pipe-like portion of the housing. The integration of the second part reduces the number of parts necessary for the adapter. The tubular shape creates an opening of the housing for the clutch and for the attachment.

The handling of the adapter can be further facilitated if it can be attached to and detached from the kitchen appliance without the use of tools. Therefore, the first part can have a form-fit structure on its inner side adapted to act together with a counter form-fit portion of the kitchen appliance. Preferably, the form-fit structure is a bayonet system. In addition to the releasable mounting of the first part in the housing, different form-fit elements can be combined with the housing, so that the adapter can be adapted to the respective kitchen appliance.

In order to facilitate the connecting and removing of the attachment to the adapter, the second part can have a form-fit structure at its outer surface adapted to act together with a counter form-fit structure of the attachment. Preferably, the form-fit structure is a bayonet system.

The form-fit engagement of the clutch with the bushing can be done by an integral ring at an outer surface of the clutch and by a counter groove at an inner surface of the bushing. Preferably the groove and the ring have a semi-circular cross-section. Such groove and ring are easy to manufacture and sharp edges or corners are avoided. Furthermore, such a form-fit engagement enables a simple and good fit of the clutch and the bushing (the clutch is fixed axially only by means of engagement of the ring in the groove). Thereby a tolerance problem of many parts fitting together can be avoided. Only tolerances of the ring and the groove have to be taken into account. This provides for a very short tolerance chain.

In order to facilitate the assembling of the bushing and of the clutch, the bushing is made of two semi-circular elements. In order to avoid a misalignment of the bushing parts to each other, they can have respective recesses and protrusions acting as form-fit elements as well.

Preferably, the bushing has a radial inner portion and radial outer portion, whereas the radial inner portion is in contact with the second part of the adapter and the radial outer part is in contact with the first part of the adapter. By means of this, those area of the bushing is broadened at which the motor torque is transferred in the clutch.

Accordingly, the clutch can have a respective design with a radial outer portion and a radial inner portion. In addition, the clutch can have a longer axial extension than the bushing in order to provide space for the mounting fixtures of the kitchen appliance and the attachment. Thereby, it is advantageously if the ring of the clutch is positioned on the radial inner portion close to the radial outer portion. Thus, the ring is at least close to the axial centre of the clutch.

In order to avoid any unintentional detachment of the adapter from the kitchen appliance and of the attachment from the adapter, the adapter can have a retaining means adapted to be activated before the adapter can be removed from the kitchen appliance and a release means adapted to be activated before the attachment can be removed from the adapter.

Preferably, the bushing comprises at least one recess adapted to communicate with a projection on the inside of the housing. The effect is that the bushing cannot rotate inside the housing. The projections can comprise thread holes for screws adapted to releasably connect the insert to the housing.

In the following, preferred embodiments of the present invention are explained with respect to the accompanying drawings. As is to be understood, the various elements and components are depicted as examples only, may be facultative and/or combined in a manner different than that depicted. Reference signs for related elements are used comprehensively and are not always defined again for each figure. Shown is schematically in
- Fig. 1:: a perspective view of a preferred embodiment of an adapter according to the invention;
- Fig. 2:: a front view of the adapter shown in figure 1;
- Fig. 3: a longitudinal section of the adapter shown in figure 1; and
- Fig. 4: an exploded view of the adapter shown in figure 1.
- Fig. 5: a perspective view of a preferred embodiment of an adapter according to the invention without the insert; and
- Fig. 6: a cross section of the housing (circumferential wall) and the clutch shown in figure 5.

Terms such as "radial inner", "radial outer" and "axial" refer to a longitudinal axis x of a housing 2 of the inventive adapter 1.

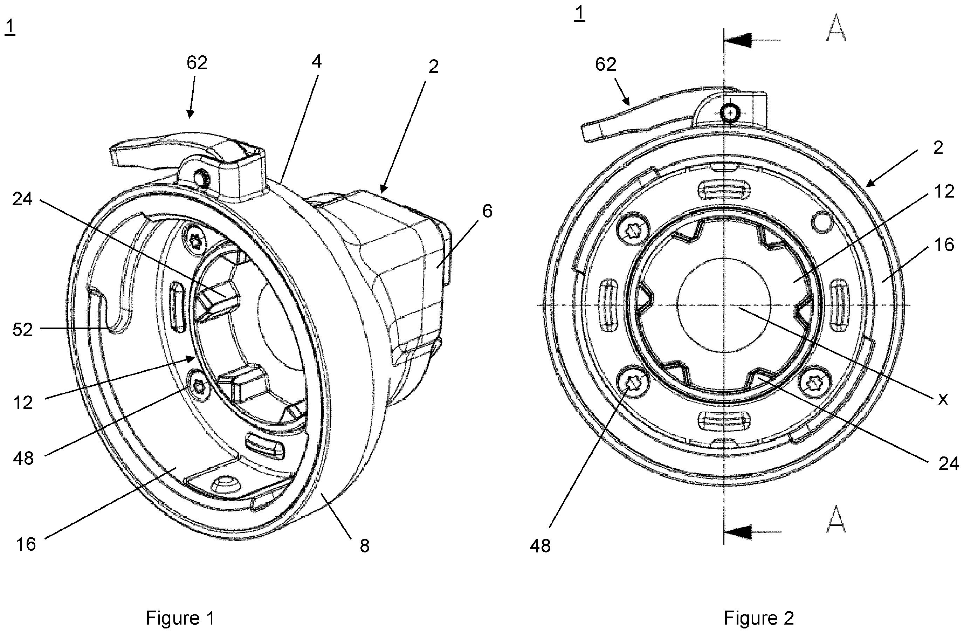

As shown in figures 1, 2 and 3, a preferred axial adapter 1 according to the invention adapted to be mounted to a kitchen appliance (not shown) and adapted to carry an attachment (not shown) of the kitchen appliance, has housing 2 having a longitudinal axis x, a circumferential wall 4 with one radial inner end 6 and an opposite radial outer end 8. Both end faces are opened so that the housing 2 is opened on both sides axially.

The radial outer end 8 is adapted to be directed to the kitchen appliance and the radial inner end 6 is adapted to be directed to the attachment of the kitchen appliance.

Inside the housing 2, parts of the adapter 1 are arranged which are required to transfer a rotation of a motor output shaft and a motor torque of an electric motor of the kitchen appliance to the attachment.

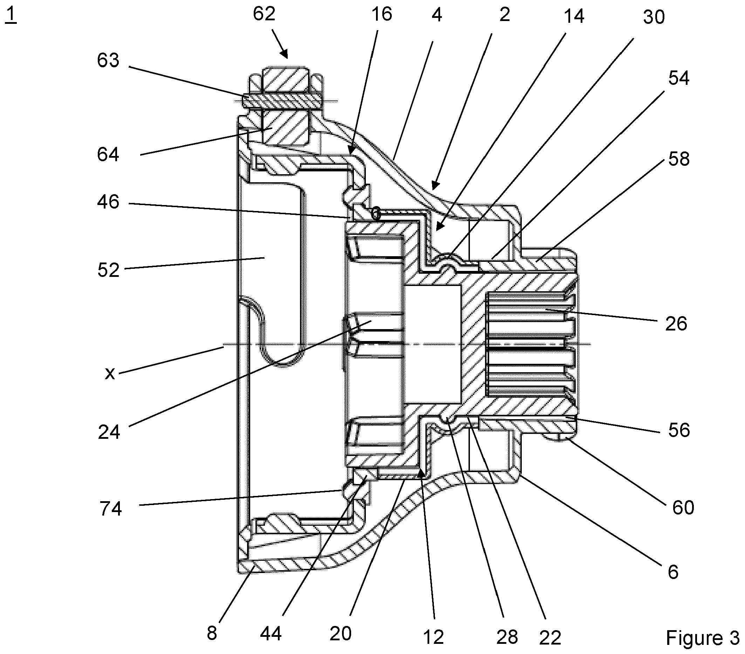

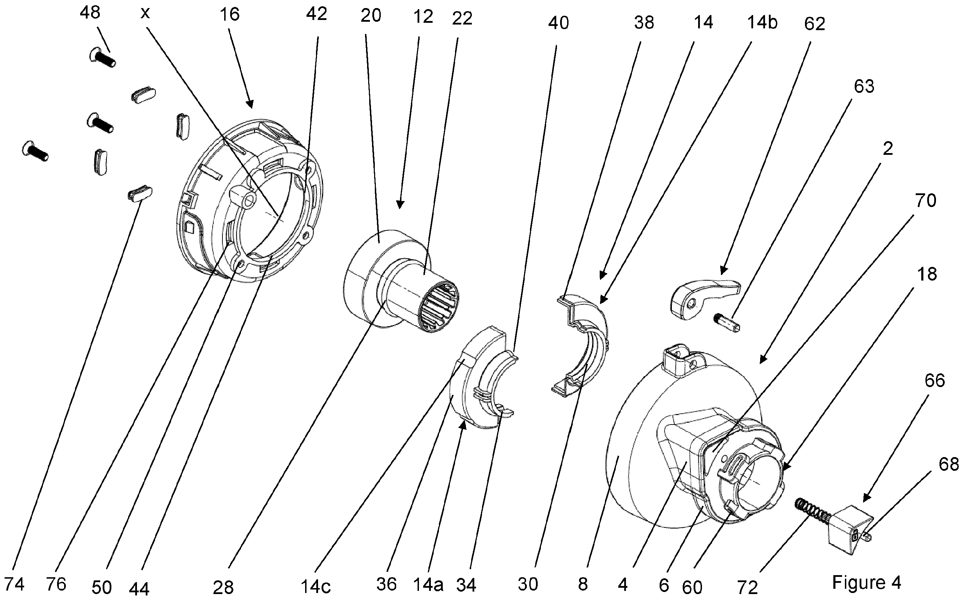

The parts are in particular a clutch 12, a bushing 14, a cup-like insert 16 (first part of the adapter 1) and a tubular part 18 (second part of the adapter 1), which will be explained in more detail with reference to figures 3 and 4.

The clutch 12 is positioned rotatably on the longitudinal axis x of the housing 2 and held in place by the bushing 14. The clutch 12 has a radial outer portion 20 and an opposite radial inner portion 22. The radial inner portion 22 has a greater axial extension than the radial outer portion 20. Both portions 20, 22 comprise an inner form-fit structure 24, 26 (figure 3) in order to receive a corresponding form-fit structure of a motor shaft coupling element and of an attachment coupling element, respectively. Thereby, the radial outer portion 20 is adapted to act together with the corresponding form-fit structure of the motor shaft coupling element and the radial inner portion 22 is adapted to act together with the corresponding form-fit structure of the attachment coupling element.

On an outer surface of the radial inner portion 22 close to the radial outer portion 20, preferably in or close to the axial centre of the clutch 12, an annular ring 28 is positioned. The annular ring 28 acts as a form-fit element and is in engagement with an annular groove 30 on an inner surface of the bushing 14. Preferably, the annular ring 28 and the corresponding grove 30 have a semi-circular shape. Due to the form-fit engagement caused by the ring 28 and the groove 30, the clutch 12 is fixed axially inside the brushing 14. In order to create a smooth, in particular a swing-free rotation of the clutch 12 around the longitudinal axis x, the annular ring 28 and the groove 30 are designed in such a way that the clutch 12 is in surface contact with bushing 14, that means that no annular gap is provided between the clutch 12 and the bushing 14 surrounding the clutch 12 (figure 3). In order to keep any friction between the clutch 12 and the bushing 14 low, the clutch 12 and the bushing 14 are made of an adequate material, such as plastics materials.

The bushing 14 has a radial inner portion 34 and radial outer portion 36, wherein the radial inner portion 34 is in contact with the cup-like insert 16 of the adapter 1 and the radial outer portion 36 is in contact with the tubular part 18 of the adapter 1. In particular, the bushing 14 is clamped axially between the cup-like insert 16 and the tubular part 18. The bushing 14 is made of two semi-circular elements 14a, 14b which allows the assembling of clutch 12 and the bushing 14. In order to self-align the two semi-circular elements 14a,14b on their contact surfaces, corresponding form-fit elements 38, 40 are provided. Both radial portions 34, 36 of the bushing 14 are shorter than the radial portions 20, 22 of the clutch 12.

The cup-like insert 16 has an opening 42 at its bottom side in order to receive the radial outer portion 20 of the clutch 12. The opening 42 is surrounded by an annular protrusion 44 acting as counter-bearing (abutment) for the bushing 14. The opening 42 has such an inner diameter that an annular gap 46 (figure 3) is provided to the radial outer portion 20 of the clutch 12, avoiding any friction between these parts when the clutch 12 is rotating.

The insert 16 is releasably connected to the housing 2 by means of screws 48 or a snap-connection (not shown). Here, the used screws 48 pass through holes 50 in an annular bottom ring surrounding the opening 42 and are in engagement with respective thread holes of the housing 2 (not shown). By means of the screws 48 the bushing 14 is clamped between the insert 16 and the tubular part 18.

On its inner surface, the insert 16 has a form-fit structure 52 in order to be attached to a correspondent form-fit structure on the kitchen appliance. Preferably, the form-fit structure 52 is designed as a bayonet connection. The insert 16 is preferably made of plastics materials.

The tubular part 18 of the adapter 1 is formed integrally with the housing 2. One axial end 54 of the tubular part 18 is positioned inside the housing 2 and acts as counter-bearing (abutment) for the bushing 14. Therefore, the axial inner end 54 has the same outer diameter as the radial inner portion 34 of the bushing 14. An inner diameter of the tubular part 18 is reduced compared with an inner diameter of the radial inner portion 34 of the bushing 14 at a whole, in order to provide an annular gap 56 (figure 3), thus avoiding any friction between the radial inner portion 22 of the clutch 12 and the tubular part 18 when the clutch 12 is rotating. The tubular part and the housing itself can be made of plastics materials or of any other adequate materials such as brushed aluminium or stainless steel.

Another axial outer end 58 of the tubular part 18 is positioned outside the housing 2. On its outer surface, a form-fit structure 60 is provided adapted to receive a corresponding form-fit structure of the attachment to be attached. Preferably, the form-fit structure 60 is designed as a bayonet connection. Thus, the adapter 1 has to on its both ends 6, 8 a form-fit structure, in particular bayonet systems.

In order to avoid that the adapter 1 is removed unintentionally from the kitchen appliance, on the radial outer end 6 of the housing 2 a retaining means 62 adapted to be activated before the adapter 1 can be removed from the kitchen appliance is provided. Here, the retaining means 62 is a kind of known lever which is pivotable arranged on a pin 63 orientated parallel to the longitudinal axis x of the housing and which has a nose 64 adapted to be in engagement with a corresponding recess of the kitchen appliance.

In addition, in order to avoid that the attachment is removed unintentionally from the adapter, a release means 66 adapted to be activated before the attachment can be removed from the adapter is provided. Here, the release means 66 has a triangular body with an axial pin 68 positioned in a corresponding recess 70 of the housing 2 and biased by a spring 72 in axial direction.

Further on, in figures 3 and 4 four rectangular bodies 74 are illustrated which are set in place in corresponding rectangular openings 76 of the cup-like insert 16. The rectangular bodies 74 can act as guiding means when attaching the adapter 1 to the kitchen appliance.

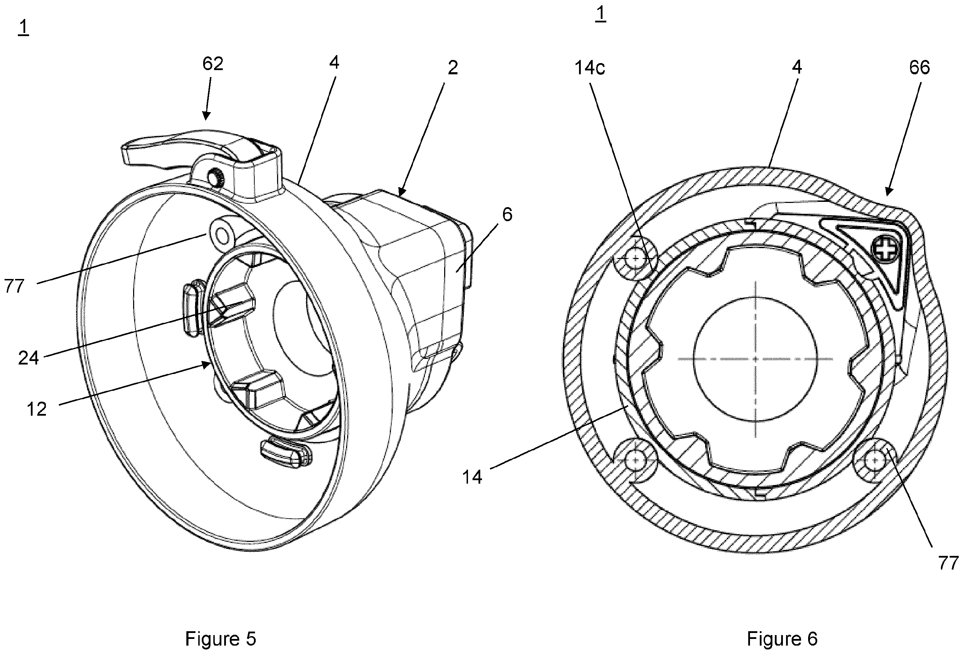

Figures 5 and 6 depict the adapter 1 with the bushing 14 comprising at least one recess 14c, preferably four, adapted to communicate with a corresponding projection 77 on the inside of the housing 2, more specifically of the circumferential wall 4. The recess 14c is shown also in figure 4.

Assembling of the adapter 1 is done by lying the two semi-circular elements 14a, 14b around the clutch 12 such that the semi-circular elements 14a, 14b are aligned to each other and that the annular ring 28 enters the groove 30. After the bushing 14 has been mounted on the clutch 12, the clutch-bushing-arrangement is positioned inside the housing, wherein the radial inner portion 22 of the clutch 12 is inserted into the tubular part 18. Then, the cup-like insert 16 is positioned in the housing 2 such that the radial outer portion 20 of the clutch 12 passes through the opening 42. Finally, the screws 48 are tightened and the bushing 14 is clamped axially between the axial inner portion 54 of the tubular part 18 and the annular protrusion 44 of the insert 16.

Disclosed is an axial adapter 1 for a kitchen appliance driven by an electric motor, adapted to be mounted to the kitchen appliance and adapted to carry an attachment of the kitchen appliance, wherein the adapter 1 has a housing 2 which is opened at its opposite end faces inside which a clutch 12 is positioned rotatably in order to transfer a rotation of a motor output shaft and a motor torque to the attachment, wherein the clutch 12 is in rotatable form-fit engagement with a bushing 14 which is firmly clamped between a first part 16 of the adapter 1 and a second part 18 of the adapter 1 opposite to the first adapter part 16.

### Reference signs

- 1: adapter
- 2: housing
- 4: circumferential wall
- 6: radial inner end (housing)
- 8: radial outer end (housing)
- 12: clutch
- 14: bushing
- 14a, 14b: semi-circular elements
- 14c: recess
- 16: insert
- 18: tubular part
- 20: radial outer portion (clutch)
- 22: radial inner portion (clutch)
- 24: form-fit structure (clutch)
- 26: form-fit structure (clutch)
- 28: annular ring
- 30: groove
- 34: radial inner portion (bushing)
- 36: radial outer portion (bushing)
- 38: form-fit element (bushing)
- 40: form-fit element (bushing)
- 42: opening
- 44: annular protrusion
- 46: gap
- 48: screw
- 50: opening
- 52: form-fit structure / bayonet (bushing)
- 54: axial inner end (tubular part)
- 56: gap
- 58: axial outer end (tubular part)
- 60: form-fit structure / bayonet (tubular part)
- 62: retaining means
- 63: pin
- 64: nose
- 66: release means
- 68: axial pin
- 70: recess
- 72: spring
- 74: rectangular body
- 76: rectangular opening
- 77: projection

- x: longitudinal axis

## Claims

1. Axial Adapter (1) for a kitchen appliance driven by an electric motor, adapted to be mounted to the kitchen appliance and adapted to carry an attachment of the kitchen appliance, wherein the adapter (1) has a housing (2) which is opened at its opposite end faces and inside which a clutch (12) is positioned rotatably in order to transfer a rotation of a motor output shaft and a motor torque to the attachment, **characterised in that** the clutch (12) is in rotatable form-fit engagement with a bushing (14) which is firmly clamped between a first part (16) of the adapter (1) and a second part (18) of the adapter (1) opposite to the first part (16).

2. Adapter according to claim 1, wherein the first part (16) is a releasable cup-like insert which is fixed inside the housing (6) by screws (48) or snap connection and which has an opening (42) for the clutch (12).

3. Adapter according to claims 1 or 2, wherein the second part (18) is an integral tubular portion of the housing (2).

4. Adapter according to claims 1, 2 or 3, wherein the first part (16) has a form-fit structure (52) on its inner side adapted to act together with a counter form-fit portion of the kitchen appliance.

5. Adapter according to claims 3 or 4, wherein the second part (18) has a form-fit structure (60) at its outer surface adapted to act together with a counter form-fit structure of the attachment.

6. Adapter according to any of the preceding claims, wherein the form-fit engagement of the clutch (12) with the bushing (14) is formed by a ring (28) at an outer surface of the clutch (12) and by a counter groove (30) at an inner surface of the bushing (14).

7. Adapter according to any of the preceding claims, wherein the bushing (14) is made of two semi-circular elements (14a, 14b).

8. Adapter according to any of the preceding claims 2 to 7, wherein the bushing (14) has a radial inner portion (34) and radial outer portion (36), wherein the radial inner portion (34) is in contact with the second part (18) of the adapter (1) and the radial outer portion (36) is in contact with the first part (16) of the adapter (1).

9. Adapter according to any of the preceding claims, wherein the clutch (12) has a radial outer portion (20) and a radial inner portion (22), and wherein the clutch (12) has a greater axial extension than the bushing (14), and wherein the ring (28) is positioned on the radial inner portion (22) close to the radial outer portion (20).

10. Adapter according to any of the preceding claims, wherein the adapter (1) has a retaining means (62) adapted to be deactivated before the adapter (1) can be removed from the kitchen appliance and a release means (66) adapted to be deactivated before the attachment can be removed from the adapter (1).

11. Adapter according to any of the preceding claims, wherein the bushing (14) comprises at least one recess (14c) adapted to communicate with a projection (77) on the inside of the housing (2).

## Patentansprüche

1. Axialadapter (1) für ein von einem Elektromotor angetriebenes Küchengerät, der so ausgelegt ist, dass er sich an dem Küchengerät befestigen lässt und ein Zubehörteil des Küchengeräts tragen kann, wobei der Adapter (1) ein Gehäuse (2) aufweist, das an seinen sich gegenüberliegenden Stirnflächen offen ist und in dem eine Kupplung (12) drehbar so positioniert ist, dass sie eine Drehbewegung einer Motorabtriebswelle und ein Motordrehmoment auf das Zubehörteil überträgt, **dadurch gekennzeichnet, dass** sich die Kupplung (12) in drehbarem formschlüssigem Eingriff mit einer Buchse (14) befindet, die fest zwischen einen ersten Teil (16) und einen dem ersten Teil (16) gegenüberliegenden zweiten Teil (18) des Adapters (1) geklemmt ist.

2. Adapter nach Anspruch 1, wobei es sich bei dem ersten Teil (16) um einen lösbaren, becherartigen Einsatz handelt, der über Schrauben (48) oder eine Schnappverbindung in dem Gehäuse (6) fixiert ist und eine Öffnung (42) für die Kupplung (12) aufweist.

3. Adapter nach Anspruch 1 oder 2, wobei es sich bei dem zweiten Teil (18) um einen integrierten rohrförmigen Abschnitt des Gehäuses (2) handelt.

4. Adapter nach Anspruch 1, 2 oder 3, wobei der erste Teil (16) an seiner Innenseite eine formschlüssige Konstruktion (52) aufweist, die so ausgelegt ist, dass sie mit einem formschlüssigen Gegenabschnitt des Küchengeräts zusammenwirkt.

5. Adapter nach Anspruch 3 oder 4, wobei der zweite Teil (18) an seiner Außenfläche eine formschlüssige Konstruktion (60) aufweist, die so ausgelegt ist, dass sie mit einer formschlüssigen Gegenkonstruktion des Zubehörteils zusammenwirkt.

6. Adapter nach einem der vorhergehenden Ansprüche, wobei der formschlüssige Eingriff der Kupplung (12) mit der Buchse (14) durch eine Wulst (28) an einer Außenfläche der Kupplung (12) und eine Gegennut (30) an einer Innenfläche der Buchse (14) entsteht.

7. Adapter nach einem der vorhergehenden Ansprüche, wobei die Buchse (14) aus zwei halbrunden Elementen (14a, 14b) gebildet ist.

8. Adapter nach einem der vorhergehenden Ansprüche 2 bis 7, wobei die Buchse (14) einen radial innenliegenden Abschnitt (34) und einen radial außenliegenden Abschnitt (36) aufweist, wobei der radial innenliegende Abschnitt (34) den zweiten Teil (18) des Adapters (1) und der radial außenliegende Abschnitt (36) den ersten Teil (16) des Adapters (1) berührt.

9. Adapter nach einem der vorhergehenden Ansprüche, wobei die Kupplung (12) einen radial außenliegenden Abschnitt (20) und einen radial innenliegenden Abschnitt (22) aufweist und in axialer Richtung länger ist als die Buchse (14) und die Wulst (28) an dem radial innenliegenden Abschnitt (22) in der Nähe des radial außenliegenden Abschnitts (20) positioniert ist.

10. Adapter nach einem der vorhergehenden Ansprüche, wobei der Adapter (1) ein Haltemittel (62) aufweist, das so ausgelegt ist, dass es deaktiviert werden muss, bevor der Adapter (1) vom Küchengerät abgenommen werden kann, und ein Freigabemittel (66), das so ausgelegt ist, dass es deaktiviert werden muss, bevor das Zubehörteil vom Adapter (1) abgenommen werden kann.

11. Adapter nach einem der vorhergehenden Ansprüche, wobei die Buchse (14) mindestens eine Vertiefung (14c) umfasst, die so ausgelegt ist, dass sie sich mit einem Vorsprung (77) an der Innenseite des Gehäuses (2) verbinden lässt.

## Revendications

1. Adaptateur axial (1) pour un appareil de cuisine actionné par un moteur électrique, conçu pour être monté sur l'appareil de cuisine et conçu pour porter un accessoire de l'appareil de cuisine, dans lequel l'adaptateur (1) comprend un boîtier (2) qui est ouvert à ses faces d'extrémité opposées et à l'intérieur duquel un accouplement (12) est positionné de façon rotative afin de transmettre une rotation d'un arbre de sortie du moteur et un couple du moteur à l'accessoire,
**caractérisé en ce que** l'accouplement (12) est en prise rotative par liaison de forme avec une douille (14) qui est serrée solidement entre une première pièce (16) de l'adaptateur (1) et une deuxième pièce (18) de l'adaptateur (1) opposée à la première pièce (16).

2. Adaptateur selon la revendication 1, dans lequel la première pièce (16) est une pièce rapportée détachable en forme de coupe qui est fixée à l'intérieur du boîtier (6) par des vis (48) ou par une liaison par encliquetage et qui comprend une ouverture (42) pour l'accouplement (12).

3. Adaptateur selon les revendications 1 ou 2, dans lequel la deuxième pièce (18) est une partie intégrante tubulaire du boîtier (2).

4. Adaptateur selon les revendications 1, 2 ou 3, dans lequel la première pièce (16) comprend une structure à liaison de forme (52) sur son côté intérieur adaptée pour coopérer avec une contre-partie à liaison de forme de l'appareil de cuisine.

5. Adaptateur selon les revendications 3 ou 4, dans lequel la deuxième pièce (18) comprend une structure à liaison de forme (60) sur sa surface extérieure adaptée pour coopérer avec une contre-structure à liaison de forme de l'accessoire.

6. Adaptateur selon l'une quelconque des revendications précédentes, dans lequel la prise par liaison de forme de l'accouplement (12) avec la douille (14) est formée par une bague (28) à une surface extérieure de l'accouplement (12) et par une contre-rainure (30) sur une surface intérieure de la douille (14).

7. Adaptateur selon l'une quelconque des revendications précédentes, dans lequel la douille (14) est constituée de deux éléments semi-circulaires (14a, 14b).

8. Adaptateur selon l'une quelconque des revendications 2 à 7, dans lequel la douille (14) comprend une partie radiale intérieure (34) et une partie radiale extérieure (36), dans lequel la partie radiale intérieure (34) est en contact avec la deuxième pièce (18) de l'adaptateur (1) et la partie radiale extérieure (36) est en contact avec la première pièce (16) de l'adaptateur (1).

9. Adaptateur selon l'une quelconque des revendications précédentes, dans lequel l'accouplement (12) possède une partie radiale extérieure (20) et une partie radiale intérieure (22), et dans lequel l'accouplement (12) a une étendue axiale plus grande que la douille (14), et dans lequel la bague (28) est positionnée sur la partie radiale intérieure (22) près de la partie radiale extérieure (20).

10. Adaptateur selon l'une quelconque des revendications précédentes, dans lequel l'adaptateur (1) comprend un moyen de retenue (62) adapté pour être désactivé avant que l'adaptateur (1) ne puisse être enlevé de l'appareil de cuisine et un moyen de libération (66) adapté pour être désactivé avant que l'accessoire ne puisse être enlevé de l'adaptateur (1).

11. Adaptateur selon l'une quelconque des revendications précédentes, dans lequel la douille (14) comprend au moins un renfoncement (14c) adapté pour communiquer avec une partie saillante (77) sur l'intérieur du boîtier (2).
